# EUROPEAN PATENT APPLICATION

(11) **EP 4 050 495 A1**
(43) Date of publication of application: **31.08.2022**
(21) Application number: 20891959.7
(22) Date of filing: 04.11.2020
(51) Int. Cl.: G06F 16/2455

(54) **TRIGGER IMPLEMENTING METHOD AND DEVICE**

(30) Priority: 27.11.2019 CN 201911183347
(71) Applicant: ZTE Corporation, Shenzhen, Guangdong 518057 (CN)
(72) Inventor: WANG, Haijun, Shenzhen, Guangdong 518057 (CN); DING, Yan, Shenzhen, Guangdong 518057 (CN)
(74) Representative: Zoli, Filippo
(86) International application number: PCT/CN2020/126580
(87) International publication number: WO 2021/103969

(57) **Abstract**

A trigger implementing method and device. The method comprises: determining, according to a type of a write statement request, a write statement request execution plan tree and a trigger execution plan tree corresponding to the write statement request (11); combining the write statement request execution plan tree and the trigger execution plan tree to obtain a write request trigger plan tree (12); and executing the write request trigger plan tree (13).

## Description

### CROSS-REFERENCE TO RELATED APPLICATION

This application is filed on the basis of the Chinese patent application No. 201911183347.3 filed November 27, 2019, and claims priority to the Chinese patent application, the entire contents of which are incorporated herein by reference.

### TECHNICAL FIELD

The present application relates to the field of database technologies, and more particularly, to a trigger implementing method and apparatus.

### BACKGROUND

A trigger is a method that a database provides to programmers and analysts to ensure data integrity. It is a special storage process related to table events, whose execution is triggered by events rather than called by programs. For example, when a table is operated, the trigger may be activated.

At present, the trigger is not supported by distributed databases, but in some application scenarios, the function of the trigger is urgently needed in service lines, which affects functional characteristics of the distributed databases and user experience.

### SUMMARY

According to some embodiments of the present application, a trigger implementing method is provided, which includes: determining, according to a type of a write statement request, a write statement request execution plan tree and a trigger execution plan tree corresponding to the write statement request; combining the write statement request execution plan tree and the trigger execution plan tree to obtain a write request trigger plan tree; and executing the write request trigger plan tree.

According to some embodiments of the present application, a trigger implementing apparatus is provided, including: a sub-execution plan tree acquisition module configured to determine, according to a type of a write statement request, a write statement request execution plan tree and a trigger execution plan tree corresponding to the write statement request; a write request trigger plan tree acquisition module configured to combine the write statement request execution plan tree and the trigger execution plan tree to obtain a write request trigger plan tree; and a trigger plan tree execution module configured to execute the write request trigger plan tree.

According to some embodiments of the present application, a trigger implementing device is provided, including a memory and a processor, where the memory stores a computer program which, when executed by the processor, causes the processor to carry out the trigger implementing method described above.

According to some embodiments of the present application, a computer-readable storage medium is provided, storing one or more programs which, when executed by one or more processors, causes the one or more processors to carry out to carry out the trigger implementing method described above.

### BRIEF DESCRIPTION OF DRAWINGS

FIG. 1 is a schematic flowchart of a trigger implementing method according to an embodiment of the present application;
FIG. 2 is an interactive sequence diagram of creation of a trigger according to an embodiment of the present application;
FIG. 3 is an interactive sequence diagram of a trigger triggering execution of a statement request according to an embodiment of the present application;
FIG. 4 is a schematic structural diagram of a trigger implementing apparatus according to an embodiment of the present application;
FIG. 5 is a schematic of the trigger implementing apparatus according to an embodiment of the present application; and
FIG. 6 is a block diagram of a storage medium according to an embodiment of the present application.

### DETAILED DESCRIPTION

Objects, technical solutions and advantages of the present disclosure will be clearer from a detailed description of embodiments of the present application in conjunction with the drawings. It is to be noted that if not conflicted, the embodiments and features therein in the present application may be combined with each other.

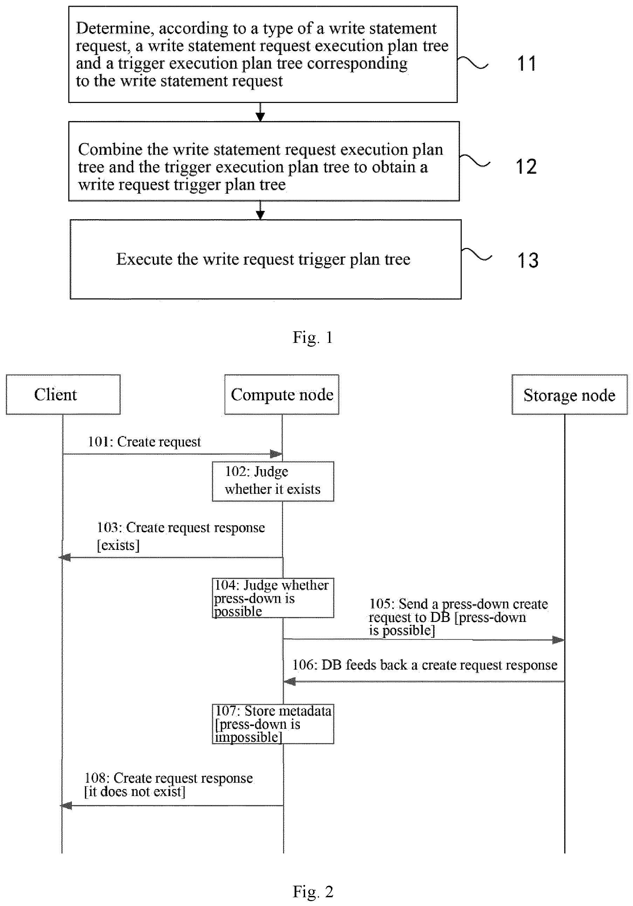

FIG. 1 is a schematic flowchart of a trigger implementing method according to the present application. The method may be applied to situations where execution of a statement request is triggered by a trigger. The method may be performed by a trigger implementing apparatus according to the present application. The trigger implementing apparatus is implemented by software and/or hardware and integrated into a device.

FIG. 1 is a schematic flowchart of a trigger implementing method according to an embodiment of the present application. The method may include the steps of S11, S12 and S13.

At S11, a write statement request execution plan tree and a trigger execution plan tree corresponding to the write statement request are determined according to a type of a write statement request.

In an example, the determining, according to a type of a write statement request, a write statement request execution plan tree and a trigger execution plan tree corresponding to the write statement request may include: acquiring a new parameter value and an old parameter value according to the type of the write statement request; obtaining the trigger execution plan tree according to the new parameter value, the old parameter value and metadata corresponding to the trigger; and directly obtaining the write statement request execution plan tree according to the type of the write statement request.

In an example, the distributed database includes: a compute node and a storage node, and signaling interaction is performed between the compute node and the storage node.

In an example, prior to the determining, according to a type of a write statement request, a write statement request execution plan tree and a trigger execution plan tree corresponding to the write statement request, the method may further include: creating the trigger through the compute node and the storage node according to a create request sent by a client; and saving the metadata corresponding to the trigger on the compute node.

In an example, the type of the write statement request includes a first-type write statement request and a second-type write statement request, the first-type write statement request includes an insert statement, and the second-type write statement request includes an update statement, a delete statement or an insert...select statement.

In an example, the acquiring a new parameter value and an old parameter value according to the type of the write statement request includes: upon a determination that the type of the write statement request includes the insert statement, directly acquiring parameter information included in the insert statement, and taking the parameter information as the old parameter value; and setting the new parameter value to be the same as the old parameter value.

In an example, the acquiring a new parameter value and an old parameter value according to the type of the write statement request may include: upon a determination that the type of the write statement request includes the second-type write statement request, sending a data acquisition request to the storage node, and receiving parameter information returned by the storage node according to the data acquisition request; and acquiring the new parameter value and the old parameter value according to the parameter information.

In an example, the acquiring the new parameter value and the old parameter value according to the parameter information may include: upon a determination that the type of the write statement request includes the update statement, taking the parameter information as the old parameter value; and obtaining the new parameter value according to the update statement and the old parameter value.

In an example, the acquiring the new parameter value and the old parameter value according to the parameter information may include: upon to a determination that the type of the write statement request includes the delete statement or the insert...select statement, taking the parameter information as the old parameter value; and setting the new parameter value to be the same as the old parameter value.

In an example, the creating the trigger through the compute node and the storage node according to a create request sent by a client may include: receiving the create request sent by the client, wherein the create request includes name of a to-be-created trigger and trigger logic; and determining, through the compute node, whether the trigger exists, if yes, directly returning a trigger existence instruction, and if no, creating the trigger according to the create request.

In an example, the creating the trigger according to the create request may include: judging, according to the create request, whether the trigger can be pressed down, if yes, sending a press-down create request to the storage node through the compute node, creating, by the storage node, the trigger according to the press-down create request, and returning the metadata corresponding to the trigger to the compute node for storage; and otherwise, creating, by the compute node, the trigger directly according to the create request, and saving the metadata corresponding to the trigger.

At S12, the write statement request execution plan tree and the trigger execution plan tree are combined to obtain a write request trigger plan tree.

In an example, in the embodiment of the present application, the write statement request execution plan tree obtained may be combined with the trigger execution plan tree obtained. That is, processing logic included in the trigger is added to processing logic included in the write statement request, so as to obtain the write request trigger plan tree.

It is to be noted that the trigger execution plan tree may include trigger time, such as before/after; a monitoring event, such as insert/update/delete; a trigger event, such as insert/update/delete, as well as a monitoring site, such as a table. Certainly, this embodiment is only an example, and the content of the information included in the trigger is not limited thereto.

At S13, the write request trigger plan tree is executed.

In an embodiment of the present application, after the write request trigger plan tree is obtained, the distributed database may execute the write statement request sent by the client by executing processing logic included in the write request trigger plan tree, so as to realize the application of trigger in the distributed database.

For example, when the trigger event included in the trigger is update, the trigger time is after, the monitoring event is update, and the monitoring site is table1, in a case where the write statement request includes table1 and update, data is acquired from the distributed database according to the specified table1 and a corresponding operation is performed after execution of the update event is determined.

In the trigger implementing method according to the embodiment of the present application, when the write statement request is executed, execution logic of the trigger can be added to execution logic of an original write statement request, and the original write statement request is executed through a newly formed execution plan, so as to realize the application of the trigger on the basis of the distributed database, thereby enhancing functional characteristics of the distributed database and improving user experience.

FIG. 2 is an interactive sequence diagram of creation of a trigger according to an embodiment of the present application. Client indicates a client, Proxy indicates a compute node, and DB indicates a storage node. The compute node and the storage node form a distributed database. Moreover, in the embodiment of the present application, prior to the execution of the statement request, the distributed database may create a trigger according to a create request of the client through the compute node and the storage node.

It is to be noted that the distributed database in this embodiment may further include other types of nodes, such as a management node. The compute node saves metadata corresponding to the trigger mainly for caching, while the management node is configured to implement final storage of the metadata. Certainly, the management node may also have other applications. Since other applications of the management node are not the focus of the present application, they are not described in detail in this embodiment.

At S101, Proxy receives a create request sent by Client.

The create request includes name of a to-be-created trigger and trigger logic. Certainly, the create request further includes attribute information of a to-be-created trigger. The attribute information may include press-down information or non-press-down information. This embodiment is only an example, and other types of attribute information also falls within the protection scope of the present application, which are not described in detail in the embodiment of the present application.

At S102, whether the trigger exists is judged.

The compute node Proxy queries table information in the distributed database according to the trigger name to determine whether a trigger with the same name exists. If yes, S103 is performed; otherwise, S104 is performed.

At S103, a create request response is returned.

Proxy returns a create request response to Client. The create request response includes indication information indicating that the trigger with the same name exists.

At S104, whether press-down is possible is judged.

When Client determines upon query that the trigger with the same name does not exist, the trigger may be created according to the create request. In the creation of the trigger, whether the trigger can be pressed down may be judged according to attribute information included in the create request, if yes, S105 is performed, and otherwise, S107 is performed.

At S105, a press-down create request is sent to DB.

When a determination is made that press-down is possible, the press-down create request is sent to the storage node DB through the compute node Proxy, and the storage node DB creates the trigger according to the press-down create request. S106 may be performed upon completion of the creation.

At S106, DB feeds back a create request response.

DB may feed the create request response back to Proxy upon completion of the creation of the trigger, and feed metadata corresponding to the trigger back to Proxy for storage.

At S107, the metadata is stored.

When a determination is made that press-down is impossible, Proxy creates the trigger directly according to the create request and saves the metadata corresponding to the trigger.

It is to be noted that, as can be seen from S105 and S107, for the press-down of the to-be-created trigger, the trigger may be created by different bodies in the distributed database. When a determination is made that press-down is possible, the creation is performed by DB, and when a determination is made that press-down is impossible, the creation is performed by Proxy, the metadata corresponding to the created trigger may be saved in Proxy regardless of whether the creation is performed by DB or Proxy.

At S108, a create request response is returned.

Proxy returns a create request response to Client. The create request response includes indication information indicating that the trigger has been created.

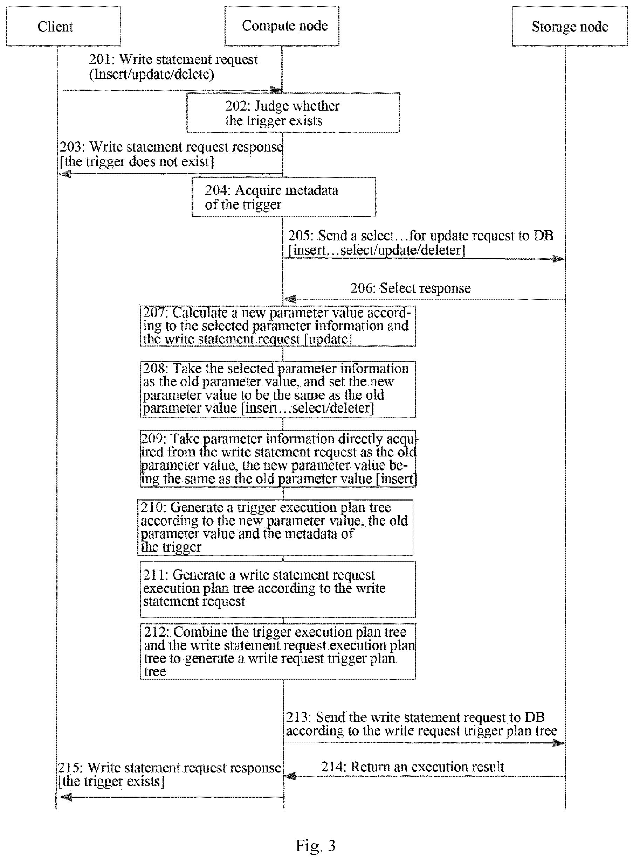

FIG. 3 is an interactive sequence diagram of a trigger triggering execution of a statement request according to an embodiment of the present application, including steps of S201 to S215.

At S201, Proxy receives a write statement request sent by Client.

A type of the write statement request sent by Client to the compute node Proxy includes a first-type write statement request and a second-type write statement request. The first-type write statement request includes an insert statement, and the second-type write statement request includes an update statement, a delete statement or an insert...select statement. In FIG. 3, for S201, the two types of write statement requests, i.e., insert and insert...select, are represented with Insert.

It is to be noted that the write statement request in this embodiment of the present application further includes a write table name, that is, which table in the distributed database the write statement may be operated for.

At S202, whether the trigger exists is judged.

Proxy may query the saved metadata according to the write table name included in the write statement request to judge whether the corresponding trigger exists, if no, S203 is performed, and if yes, S204 is performed.

At S203, a write statement request response is fed back.

When determining that no trigger exists, Proxy may only generate a write statement request execution plan tree according to the write statement request, and after executing the write statement request according to the write statement request execution plan tree, feed a write statement request response back to a write Client. Since the absence of the trigger is not the focus of the present application, it is not described in detail in this embodiment.

At S204, metadata of the trigger is acquired.

When determining that the trigger exists, Proxy may extract the metadata of the trigger saved previously. The metadata includes execution logic set for the trigger.

At S205: a select...for update request is sent to DB.

It is to be noted that a trigger execution plan tree may be constructed when a determination is made that the trigger exists. In the construction of the trigger execution plan tree, a new parameter value and an old parameter value are acquired according to the type of the write statement request; and the trigger execution plan tree is obtained according to the new parameter value, the old parameter value and the metadata corresponding to the trigger.

For the acquisition of the new parameter value and the old parameter value, according to the update statement, the delete statement or the insert...select statement included in the second-type write statement request, Proxy may send a select...for update request to DB to acquire related parameter information, and determine the new parameter value and the old parameter value from the related parameter information by performing S206 to S208. According to the insert statement in the first-type write statement request, Proxy may directly perform S209 to obtain the parameter information without sending any request to DB.

At S206, a response is selected.

After acquiring request information sent by Proxy, DB may feed back related parameter information to be acquired in the request information to Proxy according to the request.

At S207, the new parameter value is calculated according to the selected parameter information and the write statement request.

For different types of write statement requests, the new parameter value and the old parameter value may be acquired according to the parameter information in different manners. Upon a determination that the type of the write statement request includes the update statement, the parameter information acquired from DB is taken as the old parameter value; and the new parameter value is calculated according to the update statement and the old parameter value.

At S208, the selected parameter information is taken as the old parameter value, and the new parameter value is set to be the same as the old parameter value.

When a determination is made that the type of the write statement request includes a non-update statement such as a delete statement or an insert...select statement, the parameter information is taken as the old parameter value, and the new parameter value set to be the same as the old parameter value.

At S209, the parameter information directly acquired from the write statement request is taken as the old parameter value, and the new parameter value is the same as the old parameter value.

When a determination is made that the type of the write statement request includes the insert statement, parameter information included in the insert statement is directly acquired, and the parameter information is taken as the old parameter value.

At S210, the trigger execution plan tree is generated according to the new parameter value, the old parameter value and the metadata of the trigger.

After the acquisition of the new parameter value, the old parameter value and the metadata of the trigger, the new parameter value and the old parameter value may be added to the metadata of the trigger, to obtain the trigger execution plan tree including trigger processing logic.

At S211, the write statement request execution plan tree is generated according to the write statement request.

Proxy may generate the write statement request execution plan tree according to the write statement request. The write statement request execution plan tree includes processing logic included in the original write statement request.

At S212, the trigger execution plan tree and the write statement request execution plan tree are combined to generate a write request trigger plan tree.

In this embodiment, the combining the trigger execution plan tree and the write statement request execution plan tree means adding processing logic included in the trigger to the processing logic included in the original write statement request, so as to realize the application of the trigger in the distributed database.

At S213, the write statement request is sent to DB according to the write request trigger plan tree.

Proxy may send the write statement request to DB according to new processing logic included in the write request trigger plan tree, and the write statement request is executed by DB.

At S214, an execution result is returned.

DB may feed a processing result back to Proxy after processing the write statement request.

At S215, a write statement request response is fed back.

Proxy sends the processing result fed back by DB to Client, so as to respond to the write statement request sent by Client.

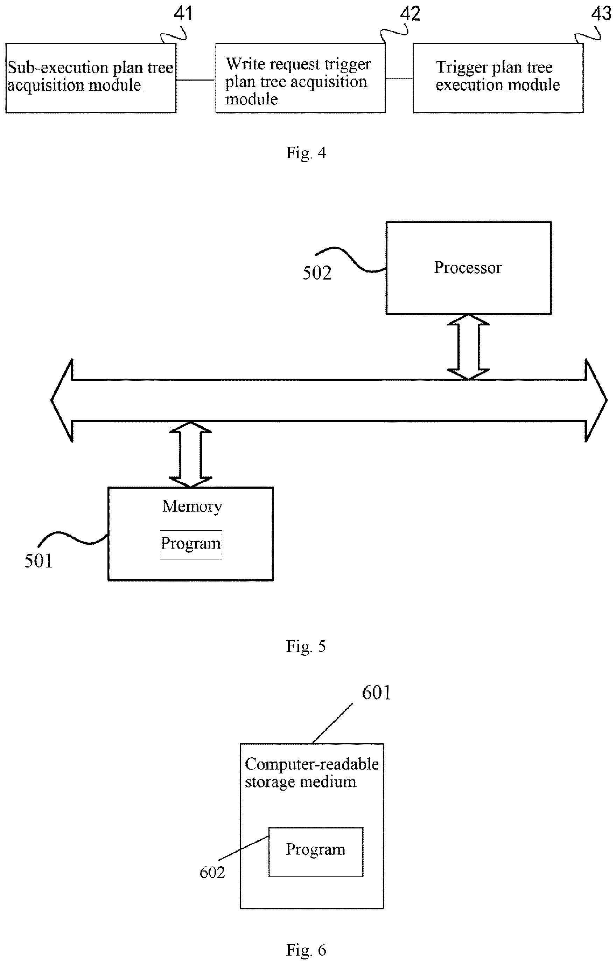

FIG. 4 is a schematic structural diagram of a trigger implementing apparatus according to an embodiment of the present application. As shown in FIG. 4, the apparatus includes: a sub-execution plan tree acquisition module 41, a write request trigger plan tree acquisition module 42 and a trigger plan tree execution module 43. The sub-execution plan tree acquisition module 41 is configured to determine, according to a type of a write statement request, a write statement request execution plan tree and a trigger execution plan tree corresponding to the write statement request. The write request trigger plan tree acquisition module 42 is configured to combine the write statement request execution plan tree and the trigger execution plan tree to obtain a write request trigger plan tree. The trigger plan tree execution module 43 is configured to execute the write request trigger plan tree.

The trigger implementing apparatus according to this embodiment is configured to perform the trigger implementing method according to the present application. Embodiment principles and technical effects of the trigger implementing apparatus according to this embodiment are similar to those of the trigger implementing method according to the present application. In the trigger implementing apparatus according to the embodiment of the present application, when the write statement request is executed, execution logic of the trigger can be added to execution logic of an original write statement request, and the original write statement request is executed through a newly formed execution plan, so as to realize the application of the trigger on the basis of the distributed database, thereby enhancing functional characteristics of the distributed database and improving user experience.

In an example, the sub-execution plan tree acquisition module is configured to: acquire a new parameter value and an old parameter value according to the type of the write statement request; obtain the trigger execution plan tree according to the new parameter value, the old parameter value and metadata corresponding to the trigger; and directly obtain the write statement request execution plan tree according to the type of the write statement request.

In an example, the distributed database includes: a compute node and a storage node, where signaling interaction is performed between the compute node and the storage node.

In an example, the apparatus further includes a trigger creation module configured to: create the trigger through the compute node and the storage node according to a create request sent by a client; and save the metadata corresponding to the trigger on the compute node.

In an example, the type of the write statement request includes a first-type write statement request and a second-type write statement request, where the first-type write statement request includes an insert statement, and the second-type write statement request includes an update statement, a delete statement or an insert...select statement.

In an example, when acquiring a new parameter value and an old parameter value according to the type of the write statement request, the sub-execution plan tree acquisition module is configured to: upon a determination that the type of the write statement request includes the insert statement, directly acquire parameter information included in the insert statement, and take the parameter information as the old parameter value; and set the new parameter value to be the same as the old parameter value.

In an example, when acquiring a new parameter value and an old parameter value according to the type of the write statement request, the sub-execution plan tree acquisition module is configured to: upon a determination that the type of the write statement request includes the second-type write statement request, send a data acquisition request to the storage node, and receive parameter information returned by the storage node according to the data acquisition request; and acquire the new parameter value and the old parameter value according to the parameter information.

In an example, when acquiring the new parameter value and the old parameter value according to the parameter information, the sub-execution plan tree acquisition module is configured to: upon a determination that the type of the write statement request includes the update statement, take the parameter information as the old parameter value; and obtain the new parameter value according to the update statement and the old parameter value.

In an example, when acquiring the new parameter value and the old parameter value according to the parameter information, the sub-execution plan tree acquisition module is configured to: upon a determination that the type of the write statement request includes the delete statement or the insert...select statement, take the parameter information as the old parameter value; and set the new parameter value to be the same as the old parameter value.

In an example, when creating the trigger through the compute node and the storage node according to a create request sent by a client, the trigger plan tree execution module is configured to: receive the create request sent by the client, wherein the create request includes name of a to-be-created trigger and trigger logic; and determine, through the compute node, whether the trigger exists, if yes, directly return a trigger existence instruction, and otherwise, create the trigger according to the create request.

In an example, when creating the trigger according to the create request, the trigger plan tree execution module is configured to: judge, according to the create request, whether the trigger can be pressed down; if yes, send a press-down create request to the storage node through the compute node, create, by the storage node, the trigger according to the press-down create request, and return the metadata corresponding to the trigger to the compute node for storage; and otherwise, create, by the compute node, the trigger directly according to the create request, and save the metadata corresponding to the trigger.

In general, multiple embodiments of the present application may be implemented in hardware or dedicated circuits, software, logic, or any combination thereof. For example, some aspects may be implemented in hardware, while others may be implemented in firmware or software executable by controllers, microprocessors, or other computing devices, although the present application is not limited thereto.

The embodiments of the present application may be implemented by the execution of computer program instructions by a data processor of a mobile device, e.g. in a processor entity, or by hardware, or by a combination of software and hardware. The computer program instructions may be assembler instructions, instruction-set-architecture (ISA) instructions, machine instructions, machine dependent instructions, microcode, firmware instructions, state-setting data, or either source code or object code written in any combination of one or more programming languages.

As shown in FIG. 5, an embodiment of the present application provides a trigger implementing device, including a memory 501 and a processor 502. The memory 501 stores a computer program which, when executed by the processor 502, causes the processor to carry out the trigger implementing method according to any embodiment.

As shown in FIG. 6, an embodiment of the present application provides a computer-readable storage medium 601. The computer-readable storage medium 601 stores one or more programs 602 which, when executed by one or more processors, cause the one or more processors to carry out the trigger implementing method according to any embodiment.

A block diagram of any logic flow in the drawings of the present application may represent program steps, or may represent interconnected logic circuits, modules, and functions, or may represent a combination of program steps and logic circuits, modules, and functions. The computer programs may be stored on a memory. The memory may be of any type suitable to the local technical environment and may be implemented by using any suitable data storage technology. For example, the memory may be, but is not limited to, a read-only memory (ROM), a random access memory (RAM), an optical memory apparatus and system (a digital video disc (DVD) or a compact disc (CD)), or the like. The computer-readable medium may include a non-transitory storage medium. The data processor may be of any type suitable to the local technical environment, such as, but is not limited to, a general purpose computer, a special purpose computer, a microprocessor, a digital signal processing (DSP), an application specific integrated circuit (ASIC), a field-programmable gate array (FGPA), and a processor based on a multi-core processor architecture.

A detailed description of exemplary embodiments of the present application has been provided above through demonstrative and non-restrictive examples. However, in consideration of the drawings and claims, various modifications and adjustments made to the above embodiments are obvious to those having ordinary skills in the art, which do not depart from the scope of the present invention. Therefore, the proper scope of the present invention will be defined by the claims.

## Claims

1. A trigger implementing method, applied to a distributed database, the method comprising:
determining, according to a type of a write statement request, a write statement request execution plan tree and a trigger execution plan tree corresponding to the write statement request;
combining the write statement request execution plan tree and the trigger execution plan tree to obtain a write request trigger plan tree; and
executing the write request trigger plan tree.

2. The method of claim 1, wherein the determining, according to a type of a write statement request, a write statement request execution plan tree and a trigger execution plan tree corresponding to the write statement request comprises:
acquiring a new parameter value and an old parameter value according to the type of the write statement request;
obtaining the trigger execution plan tree according to the new parameter value, the old parameter value and metadata corresponding to the trigger; and
directly obtaining the write statement request execution plan tree according to the type of the write statement request.

3. The method of claim 2, wherein the distributed database comprises: a compute node and a storage node, wherein signaling interaction is performed between the compute node and the storage node.

4. The method of claim 3, wherein prior to the determining, according to a type of a write statement request, a write statement request execution plan tree and a trigger execution plan tree corresponding to the write statement request, the method further comprises:
creating the trigger through the compute node and the storage node according to a create request sent by a client; and
saving the metadata corresponding to the trigger on the compute node.

5. The method of claim 4, wherein the type of the write statement request comprises a first-type write statement request and a second-type write statement request,
wherein the first-type write statement request comprises an insert statement, and the second-type write statement request comprises an update statement, a delete statement or an insert...select statement.

6. The method of claim 5, wherein the acquiring a new parameter value and an old parameter value according to the type of the write statement request comprises:
in response to a determination that the type of the write statement request comprises the insert statement, directly acquiring parameter information comprised in the insert statement, and taking the parameter information as the old parameter value; and
setting the new parameter value to be the same as the old parameter value.

7. The method of claim 5, wherein the acquiring a new parameter value and an old parameter value according to the type of the write statement request comprises:
in response to a determination that the type of the write statement request comprises the second-type write statement request, sending a data acquisition request to the storage node, and receiving parameter information returned by the storage node according to the data acquisition request; and
acquiring the new parameter value and the old parameter value according to the parameter information.

8. The method of claim 7, wherein the acquiring the new parameter value and the old parameter value according to the parameter information comprises:
in response to a determination that the type of the write statement request comprises the update statement, taking the parameter information as the old parameter value; and
obtaining the new parameter value according to the update statement and the old parameter value.

9. The method of claim 7, wherein the acquiring the new parameter value and the old parameter value according to the parameter information comprises:
in response to a determination that the type of the write statement request comprises the delete statement or the insert...select statement, taking the parameter information as the old parameter value; and
setting the new parameter value to be the same as the old parameter value.

10. The method of claim 4, wherein the creating the trigger through the compute node and the storage node according to a create request sent by a client comprises:
receiving the create request sent by the client, wherein the create request comprises a name of a to-be-created trigger and trigger logic; and
determining, through the compute node, whether the trigger exists, in response to being yes, directly returning a trigger existence instruction, and in response to being no, creating the trigger according to the create request.

11. The method of claim 10, wherein the creating the trigger according to the create request comprises:
judging, according to the create request, whether the trigger can be pressed down, in response to being yes, sending a press-down create request to the storage node through the compute node, creating, by the storage node, the trigger according to the press-down create request, and returning the metadata corresponding to the trigger to the compute node for storage; and
in response to a determination that the trigger cannot be pressed down, creating, by the compute node, the trigger directly according to the create request, and saving the metadata corresponding to the trigger.

12. A trigger implementing apparatus, comprising:
a sub-execution plan tree acquisition module configured to determine, according to a type of a write statement request, a write statement request execution plan tree and a trigger execution plan tree corresponding to the write statement request;
a write request trigger plan tree acquisition module configured to combine the write statement request execution plan tree and the trigger execution plan tree to obtain a write request trigger plan tree; and
a trigger plan tree execution module configured to execute the write request trigger plan tree.

13. A trigger implementing device, comprising:
a memory; and
a processor; wherein the memory stores a computer program which, when executed by the processor, causes the processor to carry out the trigger implementing method of any one of claims 1 to 11.

14. A computer-readable storage medium, storing a computer program which, when executed by a processor, causes the processor to carry out the trigger implementing method of any one of claims 1 to 11.
